# EUROPÄISCHE PATENTSCHRIFT

(11) **EP 1 593 617 B1**
(45) Veröffentlichungstag und Bekanntmachung des Hinweises auf die Patenterteilung: **26.08.2009**
(21) Anmeldenummer: 05009421.8
(22) Anmeldetag: 29.04.2005
(51) Int. Cl.: B65G 21/02

(54) **Einrichtung zur Führung einer Transportkette**
Guiding device for a conveyor chain
Dispositif de guidage de chaîne de convoyage

(30) Priorität: 05.05.2004 DE 102004022545
(43) Veröffentlichungstag der Anmeldung: 09.11.2005
(73) Patentinhaber: Homag Holzbearbeitungssysteme AG, 72296 Schopfloch (DE)
(72) Erfinder: Rathgeber, Peter, 72280 Dornstetten (DE)
(74) Vertreter: Schober, Mirko

(56) Entgegenhaltungen:
- DE-A1- 3 131 738
- DE-A1- 3 717 734
- DE-A1- 19 515 036
- DE-U1- 8 530 825
- JP-A- 2000 314 419
- US-A- 5 014 435

## Beschreibung

Die Erfindung bezieht sich auf eine Einrichtung zur Führung einer endlos umlaufenden Transportkette an einer plattenförmige Werkstücke im Durchlauf bearbeitenden Maschine, bei der die Kettenglieder Lauf- und Führungsrollen aus Stahl aufweisen und am Maschinengestell im Bereich des die Werkstücke aufnehmenden und entlang eines geradlinigen Bearbeitungsweges transportierenden Obertrums der Transportkette eine Führungsschiene aus Stahl mit zumindest einer Laufbahn für die Rollen der Kettenglieder angeordnet ist, wobei die Transportkette über Kettenräder umgelenkt ist, von denen zumindest eines als Antriebskettenrad ausgebildet ist.

Solche Transportketten werden vorwiegend bei Holzbearbeitungsmaschinen eingesetzt, wobei es sich bei den auf der Transportkette aufzunehmenden Werkstücken um Möbelteile, Platten für den Innenausbau oder sonstige im Baubereich zu verwendende Platten aus Holz oder einem holzartigen Werkstoff handelt. Die für diese Zwecke konzipierten Durchlaufmaschinen werden für ständig höhere Fördergeschwindigkeiten ausgelegt, wodurch verstärkt Verschleißprobleme auftreten. Die mit Laufrollen und Führungsrollen versehenen Kettenglieder führen unkontrollierbare Schlingerbewegungen aus, welche das einwandfreie Abwälzen der Lauf- und Führungsrollen in den Führungsprofilen erheblich beeinträchtigen, die sich in der Regel nicht nur entlang dem Obertrum der Transportkette, sondern auch entlang dem Umlenkbereich an den Kettenrädern erstrecken.

Die störenden Schwingungen führt man in erster Linie darauf zurück, daß die Transportkette beim Umlauf um die Kettenräder die Form eines Polygons annimmt, in die hinein und aus der heraus die einzelnen Kettenglieder wegen der im übrigen gestreckten Lage umgelenkt werden müssen. Vor allem am Antriebskettenrad wirken aufgrund des Polygoneffektes pulsierende Zugkräfte auf die Kette. Die hierdurch induzierten Schwingungen in der Transportkette verhindern, daß sich die Laufrollen und Führungsrollen der Kettenglieder in einem gleichmäßigen Kontakt mit den Laufbahnen im Führungsprofil der Führungsschienen befinden, sondern sporadisch davon abheben und wieder darauf aufschlagen. Die damit verbundenen Beschleunigungs- und Entschleunigungsvorgänge sowie die schlagartige Kraftwirkung auf die Rollen, die Führungsprofile und die Kettenräder führen zu einem sehr starken Verschleiß all dieser Bauteile und ihren Baugruppen in kurzer Zeit, und es kommt zum Ausfall des Transportsystems. Begünstigt werden die schädlichen Schwingungen noch durch eine lose, hängende Rückführung des Untertrums der Transportkette.

Der Erfindung liegt die Aufgabe zugrunde, eine Einrichtung zur Führung einer Transportkette der eingangs genannten Art zu schaffen, bei der der auf die Kettenschwingungen zurückzuführende Verschleiß verringert und damit die Standzeit der Transportkette und der sie führenden Bauteile erhöht ist.

Diese Aufgabe wird bei einer Führungseinrichtung der genannten Art dadurch gelöst, daß entlang dem Umlaufweg der Transportkette weitere Führungsschienen angeordnet sind, wobei zumindest eine der insgesamt vorhandenen Führungsschienen Hohlräume aufweist, die in Abstand von der jeweiligen Laufbahn angeordnet sind und die mit einem schwingungsdämpfenden Werkstoff ausgefüllt sind.

Für die Erfindung ist wesentlich, daß mit einem verhältnismäßig geringen Aufwand eine Dämpfung der Führungseinrichtung ür die Transportkette erreicht wird. Die mit dem schwingungsgedämpften Werkstoff verfüllten Hohlräume der betreffenden Führungsschiene bewirken, daß das allein durch die Kette bestehende Schwingungssystem nicht mit dem der Führungsschiene harmoniert, hier also eine Schwingungsentkopplung erreicht wird, die vor allem Schwingungsresonanzen vermeidet.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: eine schematische Seitansicht einer Führungseinrichtung für eine endlos umlaufende Transportkette und
- Fig. 2: einen schematischen Querschnitt durch eine der Führungsschienen der Einrichtung gemäß Fig. 1.

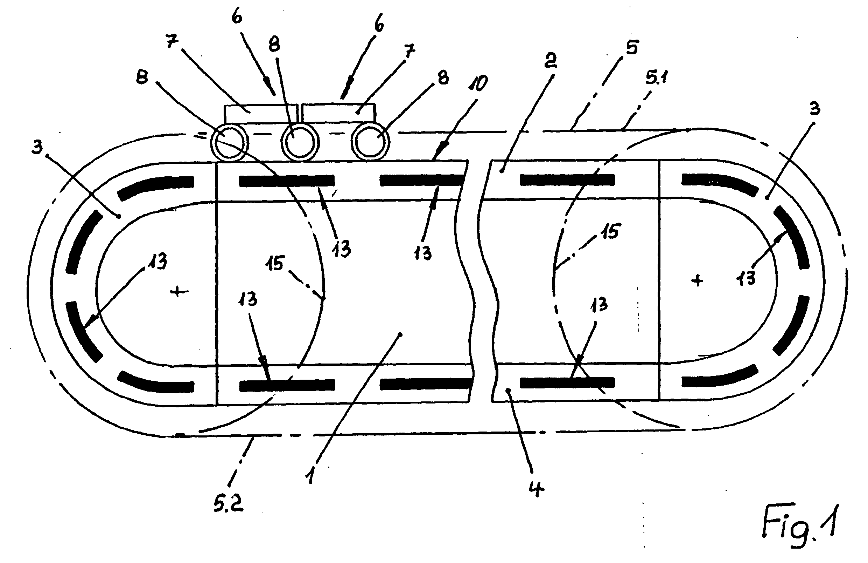

Im einzelnen ist in Fig. 1 ein Maschinengestell 1 als zentraler Körper wiedergegeben. An dem Maschinengestell 1 ist eine endlos umlaufende Kette 5 angeordnet, die im wesentlichen lediglich als Linie dargestellt ist, welche den ovalen Umlaufweg der Transportkette 5 wiedergibt. Entlang diesem Umlaufweg sind an dem Maschinengestell 1 eine obere gerade Führungsschiene 2, seitliche halbkreisförmige Führungsschienen 3 und eine untere Führungsschiene 4 angeordnet, diese Führungsschienen 2 - 4 sind aus Stahl gefertigt. Die obere Führungsschiene 2 und die untere Führungsschiene 4 verlaufen geradlinig, sie führen das Obertrum 5.1 und das Untertrum 5.2 der Transportkette 5. Die beiden halbkreisförmigen Führungsschienen 3 sind entlang dem Umschlingungsweg angeordnet, den die Transportkette 5 entlang von zwei sie umlenkenden Kettenrädern 15 zurücklegt.

Die Transportkette 5 ist aus einer Vielzahl von Kettengliedern 6 mit regelmäßiger Teilung zusammengesetzt. Die Kettenglieder 6 weisen Kettengliedkörper 7 auf, die gelenkig miteinander verbunden sind. An den Gelenkstellen sind Laufrollen 8 vorgesehen, die auf einer Laufbahn 10 der Führungsschienen 2 - 4 abwälzen.

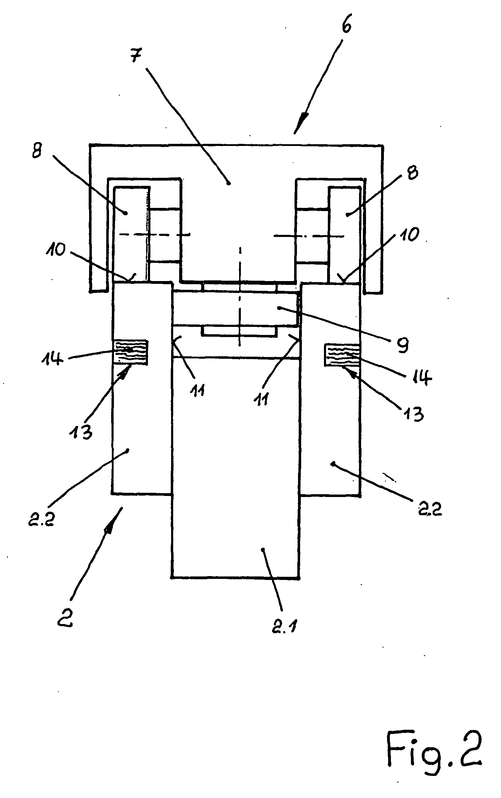

Fig. 2 zeigt im einzelnen den Aufbau der oberen Führungsschiene 2, die weiteren Führungsschienen 3, 4 sind in analoger Weise ausgeführt, wobei sich hier Abänderungen insoweit ergeben, wie es um die Abstützung der Kettenglieder 6 entgegen der Schwerkraft geht. Die Führungsschiene 2 weist einen zentralen Träger 2.1 auf, an welchem bei den Längsseiten je eine Tragschiene 2.2 angeordnet ist, die nach oben über den mittigen Träger 2.1 übersteht. Zwischen den oberen Bereichen der Tragschienen 2.2 ist somit ein Hohlprofil ausgebildet, in welches an den Kettengliedern 6 gelagerte Führungsrollen 9 hineinragen. Die Laufrollen 8 an den Kettengliedern 6 wälzen sich an einer oberseitigen Laufbahn 10 der Tragschienen 2.2 ab, und die Führungsrollen 9 der Kettenglieder 6 tangieren jeweils eine der beiden als Lauf- oder Führungsbahnen 11 ausgebildeten Innenseiten der Trägerschienen 2.2.

Die Besonderheit der Führungsschiene 2 ebenso wie die der weiteren Führungsschienen 3 und 4 liegt darin, daß an geeigneter Stelle, wie bei der Ausführungsform nach Fig. 2 an den Tragschienen 2.2 Hohlräume 13 vorgesehen sind, die mit einem schwingungsdämpfenden Werkstoff 14 verfüllt sind. Grundsätzlich müssen nicht sämtliche Führungsschienen 2, 3 und 4 mit einer solchen Dämpfungseinrichtung versehen sein, es kann ausreichen, diejenige Führungsschiene 2, 3 oder 4 zu bedämpfen, von der aus sich die Schwingungen entlang dem Umlaufweg der Transportkette 5 fortsetzen.

Wie Fig. 1 veranschaulicht, erstrecken sich die ausgefüllten Hohlräume 13 entlang der gesamten Länge der Laufbahnen 10, 11 der Führungsschienen 2 - 4. Die Hohlräume 13 sind in Abstand von den Laufbahnen 10, 11 angeordnet, die folglich nicht von den Hohlräumen 13 beeinträchtigt werden. Die Konfiguration der Hohlräume 13 richtet sich zum einen nach den Fertigungsmöglichkeiten und zum anderen nach der anzustrebenden Optimierung der Dämpfungseigenschaften. Gleiches gilt für den die Hohlräume 13 verfüllenden Werkstoff 14, der einerseits einen solch maßgeblichen Anteil an dem Volumen der Führungsschienen 2 - 4 hat, daß deren Schwingungsverhalten gegenüber der massiven Ausführung in Stahl verändert ist. Andererseits ist zum einen die geometrische Form der Führungsschienen 2 - 4 so zu wählen, daß die verlangte Festigkeit erreicht wird, die durch die Art des die Hohlräume 3 verfüllenden Werkstoffs 14 unterstützt werden kann. Hierfür kommt unter anderem ein mit Füllstoffen armierter Kunststoff in Betracht, wobei es sich bei den Füllstoffen vornehmlich um solche auf mineralischer Basis handelt.

Unabhängig von der Form der Hohlräume 13 erstrecken sich diese in einer oder in mehreren Reihen in der Längsrichtung der Führungsschienen 2 - 4. Zweckmäßig sind die Hohlräume 13 durch eingearbeitete Schlitze oder Nuten gebildet, deren Längsrichtung parallel zur Längsrichtung der Führungsschienen 2 - 4 insbesondere parallel zu den Laufbahnen 10, 11 liegt. Die in dieser Form länglichen Hohlräume 13 können auch wechselseitig an den Führungsschienen 2 - 4 vorgesehen sein, bei der Anordnung in zwei oder mehreren Reihen auch eine Überlappung der Hohlräume 13 benachbarter Reihen parallel zur Längsrichtung der Führungsschienen 2 - 4 ist möglich. Grundsätzlich können auch in Längsrichtung der Führungsschienen 2 - 4 durchgehende Hohlräume 13 vorgesehen werden, mit Rücksicht auf die nicht zu beeinträchtigende Festigkeit der Führungsschienen 2 - 4 sind die einer Reihe zugeordneten Hohlräume 13 voneinander beabstandet.

## Patentansprüche

1. Einrichtung zur Führung einer endlos umlaufenden Transportkette (5) an einer plattenförmige Werkstücke im Durchlauf bearbeitenden Maschine, bei der die Kettenglieder (6) Lauf- und Führungsrollen (8, 9) aus Stahl aufweisen und am Maschinengestell (1) im Bereich des die Werkstücke aufnehmenden und entlang eines geradlinigen Bearbeitungsweges transportierenden Obertrums (5.1) der Transportkette (5) eine Führungsschiene (2) aus Stahl mit zumindest einer Laufbahn (10, 11) für die Rollen (8, 9) der Kettenglieder (6) angeordnet ist, wobei die Transportkette (5) über Kettenräder (15) umgelenkt ist, von denen zumindest eines als Antriebskettenrad ausgebildet ist,
**dadurch gekennzeichnet,**
**daß** entlang dem Umlaufweg der Transportkette (5) weitere Führungsschienen (3, 4) angeordnet sind, wobei zumindest eine der insgesamt vorhandenen Führungsschienen (2 - 4) Hohlräume (13) aufweist, die in Abstand von der jeweiligen Laufbahn (10, 11) angeordnet sind und die mit einem schwingungsdämpfenden Werkstoff (14) ausgefüllt sind.

2. Einrichtung nach Anspruch 1,
**dadurch gekennzeichnet,**
**daß** die ausgefüllten Hohlräume (13) entlang der gesamten Länge der Laufbahn (10, 11) der betreffenden Führungsschiene (2, 3, 4) angeordnet sind.

3. Einrichtung nach Anspruch 1 oder 2,
**dadurch gekennzeichnet,**
**daß** die Hohlräume (13) in zumindest einer zur Laufbahn (10, 11) der betreffenden Führungsschiene (2, 3, 4) parallel sich erstreckenden Reihe angeordnet sind.

4. Einrichtung nach einem der Ansprüche 1 - 3,
**dadurch gekennzeichnet,**
**daß** die ausgefüllten Hohlräume (13) je eine längliche Form haben, deren Längsrichtung parallel zur Laufbahn (10, 11) der betreffenden Führungsschiene (2, 3, 4) ist.

5. Einrichtung nach Anspruch 4,
**dadurch gekennzeichnet,**
**daß** die Hohlräume (13) die Form von Schlitzen oder Nuten haben.

6. Einrichtung nach einem der Ansprüche 1 - 5,
**dadurch gekennzeichnet,**
**daß** der die Hohlräume (13) der betreffenden Führungsschiene (2 - 4) ausfüllende, dämpfende Werkstoff (14) ein ausgehärteter Kunststoff ist.

7. Einrichtung nach Anspruch 1 - 6,
**dadurch gekennzeichnet,**
**daß** der die Hohlräume (13) ausfüllende, dämpfende Werkstoff (14) mit einem dessen Festigkeit erhöhenden Füllstoff versehen ist.

8. Einrichtung nach einem der Ansprüche 1 - 7,
**dadurch gekennzeichnet,**
**daß** entlang der Kettenräder (15) und/oder des Laufweges des Untertrums (5.2) der Transportkette (5) die weiteren
Führungsschienen (3, 4) für die Laufrollen (8, 9) der Kettenglieder (6) angeordnet sind, die in gleicher Weise wie die Führungsschiene (2) für das Obertrum (5.1) der Transportkette (5) mit mit einem schwingungsdämpfenden Werkstoff (14) ausgefüllten Hohlräumen (13) ausgestattet sind.

## Claims

1. Guiding device for an endless conveyor chain (5) on a machine which machines plate-like workpieces as they pass through, in which machine the chain links (6) comprise steel track rollers and guide rollers (8, 9) and wherein a steel guide rail (2) with at least one runway (10, 11) for the rollers (8, 9) of the chain links (6) is arranged on the machine frame (1) in the region of the upper run (5.1) of the conveyor chain (5) receiving the workpieces and transporting them along a straight machining path, wherein the conveyor chain (5) is guided via sprockets (15), of which at least one is formed as a drive sprocket,
**characterised in that**
further guide rails (3, 4) are arranged along the path of the conveyor chain (5), whereby at least one of the total number of guide rails (2 - 4) comprises hollow spaces (13) which are arranged at a distance from the respective runway (10, 11) and which are filled with a vibration damping material (14).

2. Device according to claim 1,
**characterised in that**
the filled hollow spaces (13) are arranged along the whole length of the runway (10, 11) of the respective guide rail (2, 3, 4).

3. Device according to claim 1 or 2,
**characterised in that**
the hollow spaces (13) are arranged in at least one.row extending parallel to the runway (10, 11) of the respective guide rail (2, 3, 4).

4. Device according to one of the claims 1 - 3,
**characterised in that**
the filled hollow spaces (13) each have an elongated form, the longitudinal direction of which is parallel to the runway (10, 11) of the respective guide rail (2, 3, 4) .

5. Device according to claim 4,
**characterised in that**
the hollow spaces (13) are in the form of slots or grooves.

6. Device according to one of the claims 1 - 5,
**characterised in that**
the damping material (14) filling the hollow spaces (13) of the respective guide track (2 - 4) is a hardened plastic.

7. Device according to claims 1 - 6,
**characterised in that**
the damping material (14) filling the hollow spaces (13) is provided with a filler increasing its strength.

8. Device according to one of the claims 1 - 7,
**characterised in that**
the further guide rails (3, 4) for the track rollers (8, 9) of the chain links (6) are arranged along the sprockets (15) and or the running path of the lower run (5.2) of the conveyor chain (5), said guide rails (3, 4) being provided with hollow spaces (13) filled with a vibration damping material (14) in the same way as the guide rail (2) for the upper run (5.1) of the conveyor chain (5) .

## Revendications

1. Dispositif pour le guidage d'une chaîne de transporte (5) continue à une machine traitant en continu des pièces en forme de plaques, dans lequel les éléments de chaîne (6) présentent des galets de roulement et de guidage (8, 9) en acier, et un rail de guidage (2) en acier, avec au moins une voie de roulement (10, 11) pour les galets (8, 9) des éléments de chaîne (6), étant agencé au bâti de la machine (1), dans la région du brin supérieur (5.1) de la chaîne de transport (5), qui prend en charge les pièces à usiner et les transportent le long d'une voie de traitement en ligne droite, ladite chaîne de transport (5) étant déviée par l'intermédiaire de pignons à chaîne (15) dont l'un au moins est conçu en tant que pignon d'entraînement,
**caractérisé en ce que**
d'autres rails de guidage (3, 4) sont disposés le long de la voie sans fin de la chaîne de transporte (5), au moins l'un de tous les rails de guidage (2 au 4) prévus présentant des cavités (13), qui sont disposées à distance de la voie de roulement (10, 11) respective et qui sont remplies avec un matériau amortisseur de vibrations (14).

2. Dispositif selon la revendication 1,
**caractérisé en ce que**
les cavités (13) remplies sont disposées le long de la longueur totale de la voie de roulement (10, 11) du rail de guidage (2, 3, 4) concerné.

3. Dispositif selon revendication 1 ou 2,
**caractérisé en ce que**
les cavités (13) sont disposées sur au moins une rangée s'étendant parallèlement à la voie de roulement (10, 11) du rail de guidage (2, 3, 4) concerné.

4. Dispositif selon l'une des revendications 1 à 3,
**caractérisé en ce que**
les cavités (13) remplies présentent chacune une forme allongée, dont la direction longitudinal est parallèle à la voie de roulement (10, 11) du rail de guidage (2, 3, 4) concerné.

5. Dispositif selon la revendication 4,
**caractérisé en ce que**
les cavités (13) ont la forme de fentes ou de rainures.

6. Dispositif selon l'une des revendications 1 à 5,
**caractérisé en ce que**
le matériau amortisseur (14) remplissant les cavités (13) du rail de guidage (2 à 4) concerné est une matière plastique durcie.

7. Dispositif selon l'une des revendications 1 à 6,
**caractérisé en ce que**
le matériau amortisseur (14) remplissant les cavités (13) est pourvu d'une matière de charge, qui augment sa fermeté.

8. Dispositif selon l'une des revendications 1 à 7,
**caractérisé en ce que**,
le long des pignons à chaîne (15) et / ou de la voie de roulement du brin inférieur (5.2) de la chaîne de transporte (5), sont disposé les autres rails de guidage (3, 4) pour les galets de roulement (8, 9) des éléments de chaîne (6), qui sont équipés, de la même manière que le rail de guidage (2) pour le brin supérieur (5.1) de la chaîne de transporte (5), de cavités (13) remplies avec un matériau amortisseur de vibrations (14).
